# FASCICULE DE BREVET EUROPEEN

(11) **EP 3 762 164 B1**
(45) Date de publication et mention de la délivrance du brevet: **16.02.2022**
(21) Numéro de dépôt: 19716464.3
(22) Date de dépôt: 05.03.2019
(51) Int. Cl.: B21J 15/02, B21J 15/14, B21J 15/28, B21J 15/42, B21J 15/48, B64F 5/10, B23Q 1/76, B23Q 3/10, B23B 35/00, B21J 15/10

(54) **MACHINE ET PROCÉDÉ DE RIVETAGE**
NIETMASCHINE UND VERFAHREN
RIVETING MACHINE AND METHOD

(30) Priorité: 05.03.2018 FR 1800193
(43) Date de publication de la demande: 13.01.2021
(73) Titulaire: Cybermeca, 85200 Fontenay-le-Comte (FR)
(72) Inventeur: LEDOUX, Didier, 85200 Fontenay-le-Comte (FR)
(74) Mandataire: Ipsilon
(86) Numéro de dépôt international: PCT/FR2019/050486
(87) Numéro de publication internationale: WO 2019/170997

(56) Documents cités:
- CN-A- 106 363 122
- DE-U1- 29 611 124
- FR-A1- 3 006 922
- US-A- 5 687 463

## Description

### DOMAINE DE L'INVENTION

La présente invention concerne de manière générale le rivetage. L'invention concerne plus particulièrement une machine de rivetage de pièces, de préférence des tôles, par exemple pour un fuselage d'avion.

### ART ANTERIEUR

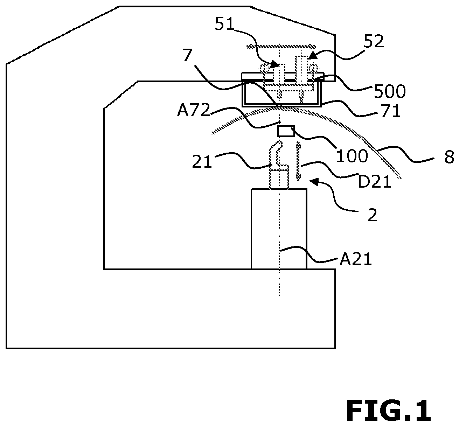

Pour riveter des pièces, telles que des tôles 8 illustrées dans l'exemple de la figure 1, il est connu d'utiliser une machine de rivetage qui comprend un serre-tôle supérieur 71 et un serre-tôle inférieur 21 pour permettre de serrer les pièces 8 à riveter en vue de leur perçage puis de leur rivetage.

La machine comprend aussi un outil de perçage 52 présentant un axe de perçage pour percer un orifice à travers les pièces à riveter. Une bouterolle inférieure est destinée à coopérer avec une bouterolle 51 supérieure pour écraser un rivet, disposé à l'intérieur de l'orifice ménagé à travers les pièces à riveter.

Le serre-tôle supérieur 71 présente en particulier un orifice 72 de passage en regard duquel l'outil de perçage 52 est positionné pour réaliser le perçage souhaité à travers les pièces.

Pour procéder au perçage, il est prévu que l'axe A21 du serre-tôle inférieur 21 soit aligné avec l'axe de perçage, c'est-à-dire aligné avec l'axe de l'orifice de perçage que l'on souhaite réaliser à travers les pièces à riveter, pour former un contre-appui au droit de la zone de perçage du côté des pièces opposé à celui sollicité par l'outil de perçage.

Cependant, on constate pour certaines pièces à riveter, en particulier pour certaines zones de pièces à riveter, qu'un obstacle, schématisé avec la référence 100 dans l'exemple de la figure 1, qui peut être formé par un élément déjà fixé sur l'une de ses pièces, peut être présent sur cet axe de perçage entre les pièces et le serre-tôle inférieur 21, ce qui empêche d'amener le serre-tôle inférieur 21 en contact d'appui des pièces dans l'axe de l'orifice de perçage souhaité.

On connait également des documents US5687463, sur lequel se base le préambule de la revendication 1, CN106363122, et FR3006922 des machines de rivetage, pour lesquelles les parties de la machine qui prennent en sandwich les pièces à riveter sont disposées de manière coaxiale à l'axe de perçage, ce qui pose le même problème que celui présenté ci-dessus, en cas d'obstacle dans l'axe de perçage pour réaliser un orifice destiné à recevoir un rivet.

On connait par ailleurs du document DE29611124 une machine de perçage permettant de percer une plaque, mais qui ne permet pas de réaliser le rivetage de plusieurs pièces.

La présente invention a pour but de proposer une nouvelle machine de rivetage permettant de palier à tout ou partie des problèmes exposés ci-dessus.

### RESUME DE L'INVENTION

A cet effet, l'invention a pour objet une machine de rivetage de pièces, de préférence des tôles, par exemple pour un fuselage d'avion, ladite machine étant conforme à la revendication 1.

La mobilité transversale relative des serre-tôles permet un décalage latéral de l'axe d'appui du serre-tôle inférieur par rapport à l'axe de l'orifice de passage ménagé dans le serre-tôle supérieur, qui est situé en regard de la zone de la pièce à percer.

Ainsi, malgré la présence d'un obstacle sous la zone à percer des pièces qui empêcherait d'amener le serre-tôle inférieur en regard directement de la zone de la pièce à percer, le serre-tôle inférieur peut être décalé pour contourner l'obstacle et former un contre-appui à proximité de la zone à percer pour permettre à l'outil de perçage, qui s'étend de l'autre côté des pièces à riveter, de percer à l'endroit souhaité tout en bénéficiant d'un contre-appui pour une bonne qualité de perçage.

Une telle conception de la machine permet ainsi de réaliser l'ensemble des perçages souhaités à l'aide de la machine. La pose de rivet (positionnement et écrasement) dans les orifices ainsi percés, peut s'effectuer avec la machine en l'absence d'obstacle autour de l'orifice percé correspondant, tandis qu'en présence d'un obstacle du côté du serre-tôle inférieur, l'opérateur conserve la possibilité de mettre en place le rivet manuellement dans l'orifice déjà percé.

La possibilité de réaliser l'ensemble des orifices de perçage (nécessaires à la mise en place des rivets) à l'aide de la même machine de rivetage, malgré la présence d'obstacle du côté du serre-tôle inférieur, permet un gain de temps important. En effet, il n'est pas nécessaire de faire passer les pièces entre plusieurs machines pour réaliser les opérations de perçage et rivetage, même en cas d'obstacle, ce qui permet d'obtenir un gain de temps important.

On comprend que l'utilisation de plusieurs machines séparées en fonction de la présence d'obstacle et/ou des outils à utiliser, poserait des problèmes d'encombrement et de temps de cycle.

La machine peut aussi comporter une ou plusieurs des caractéristiques suivantes prises dans toute combinaison techniquement admissible, sans s'écarter du champ des revendications annexées.

Selon une caractéristique avantageuse de l'invention, la bouterolle supérieure est déplaçable selon une direction transversale à l'axe de perçage, de manière à venir en regard de l'orifice de passage du serre-tôle supérieur, pour pouvoir une fois le perçage des pièces effectué, mettre en place un rivet dans le perçage.

Selon une caractéristique avantageuse de l'invention, la bouterolle supérieure et l'outil de perçage sont portés par une structure support, appelée chariot bouterolle, la machine comprenant un système de déplacement motorisé du chariot bouterolle selon une direction transversale à l'axe de perçage.

Selon une caractéristique avantageuse de l'invention, le serre-tôle supérieur est porté par une structure support, appelée chariot tête, qui porte également le chariot bouterolle, et la machine comprend un système de déplacement motorisé dudit chariot tête selon une direction transversale à l'axe de perçage.

Selon une caractéristique avantageuse de l'invention, le système de déplacement motorisé dudit chariot tête qui comprend au moins une partie des éléments suivants : rails, patins, vis à billes, pignon, crémaillère, réducteur.

Selon une caractéristique avantageuse de l'invention, la machine comprend une structure support, appelée chariot inférieur, du serre-tôle inférieur et de la bouterolle inférieure, et la machine comprend un système de déplacement motorisé dudit chariot inférieur selon une direction transversale à l'axe de perçage.

Selon une caractéristique avantageuse de l'invention, le système de déplacement motorisé dudit chariot inférieur comprend au moins une partie des éléments suivants : rails, patins, vis à billes, pignon, crémaillère, réducteur.

Selon une caractéristique avantageuse de l'invention, ladite machine comprend un châssis et un système de déplacement motorisé du serre-tôle inférieur par rapport au châssis, de préférence suivant une direction parallèle à l'axe de perçage, entre une position, dite position inactive du serre-tôle supérieur et une position, dite position de serrage, pour exercer un effort d'appui sur les pièces à riveter. En position inactive, les serre-tôles n'exercent pas d'effort de pression sur les pièces.

Selon une caractéristique avantageuse de l'invention, ladite bouterolle supérieure comprend une tige et deux mâchoires situées de part et d'autre de l'axe de la tige, et la machine comprend un système de déplacement motorisé de la tige de la bouterolle supérieure configurés pour déplacer ladite extrémité de la tige entre une première position, dite position haute, écartée de la surface d'appui du serre-tôle supérieur, dans laquelle ladite tige délimite avec les mâchoires un logement de maintien de rivet, et une deuxième position, dite position basse, plus proche de ladite surface d'appui du serre-tôle supérieur.

Selon une caractéristique avantageuse de l'invention, l'outil de perçage comprend une broche de perçage et/ou une fraise.

L'invention concerne également un procédé de rivetage de deux pièces à l'aide d'une machine de rivetage telle que décrite ci-dessus, lorsqu'un obstacle est situé du côté du serre-tôle inférieur dans l'axe d'un orifice de perçage souhaité d'une zone des pièces à riveter, ledit procédé étant conforme à la revendication 9.

On comprend que le serre-tôle inférieur est écarté de l'axe de perçage suffisamment pour contourner l'obstacle qui se situe dans l'axe de l'orifice de perçage souhaité. Selon un mode de réalisation particulier, le serre-tôle inférieur peut être écarté suffisamment de l'axe pour être en dehors de la trajectoire de l'outil de perçage pour ne pas être lui- même percé.

Selon une caractéristique avantageuse de l'invention, le procédé comprend les étapes suivantes :
- introduction (par exemple par l'opérateur) d'un rivet dans ledit perçage réalisé;
- écrasement du rivet à l'aide d'un outil, par exemple un pistolet à frappe manipulé par l'opérateur.

On peut en particulier prévoir que la machine soit configurée pour exécuter un programme de perçage des pièces en de multiples position comprenant des positions de perçages atteignables par le serre-tôle inférieur, de sorte que le serre-tôle inférieur est alors amené dans l'axe de perçage, et comprenant en outre des positions non atteignables par le serre-tôle inférieur du fait d'un ou plusieurs obstacles, de sorte que le serre-tôle inférieur est alors écarté du ou des obstacles et donc de l'axe de perçage, tout en assurant un contre-appui lors du perçage pour une bonne qualité de perçage. Les positions des pièces percées en des zones dépourvues d'obstacles peuvent être rivetées par cette même machine, tandis que les positions percées en des zones soumises à un ou des obstacles peuvent être, par cette même machine, munies de rivets, qui peuvent être écrasés par la suite.

### BREVE DESCRIPTION DES DESSINS

D'autres caractéristiques et avantages de l'invention ressortiront encore de la description qui suit, laquelle est purement illustrative et non limitative et doit être lue en regard des dessins annexés, sur lesquels :
- la figure 1 est une vue d'une machine de rivetage connue de l'état de la technique et présentée ci-avant ;
- la figure 2 est une vue conformément à un mode de réalisation de l'invention, d'une machine de rivetage dans une configuration selon laquelle l'axe d'appui du serre-tôle inférieur est aligné avec l'axe de l'orifice de passage ménagé dans le serre-tôle supérieur ;
- la figure 3 est une vue conformément à un mode de réalisation de l'invention, d'une machine de rivetage dans une configuration selon laquelle l'axe d'appui du serre-tôle inférieur est décalé par rapport à l'axe de l'orifice de passage ménagé dans le serre-tôle supérieur ;
- les figures 4 à 8 illustrent de manière schématique différentes étapes (perçage, étanchéité, positionnement de rivet, écrasement de rivet) d'un procédé de rivetage de deux pièces, à l'aide d'une machine de rivetage par exemple conforme à celle de la figure 2 ou 3, dans une configuration selon laquelle l'axe du serre-tôle inférieur reste aligné avec l'axe de l'orifice de passage ménagé dans le serre-tôle supérieur ;
- les figures 9 et 10 illustrent de manière schématique des étapes de serrage et de perçage de deux pièces, à l'état décalé de l'axe d'appui du serre-tôle inférieur par rapport à l'axe de l'orifice de passage ménagé dans le serre-tôle supérieur.

### DESCRIPTION DETAILLEE

Le concept de l'invention est décrit plus complètement ci-après avec référence aux dessins joints, sur lesquels des modes de réalisation du concept de l'invention sont montrés. Sur les dessins, la taille et les tailles relatives des éléments peuvent être exagérées à des fins de clarté. Des numéros similaires font référence à des éléments similaires sur tous les dessins. Cependant, ce concept de l'invention peut être mis en œuvre sous de nombreuses formes différentes et ne devrait pas être interprété comme étant limité aux modes de réalisation exposés ici. Au lieu de cela, ces modes de réalisation sont proposés de sorte que cette description soit complète, et communiquent l'étendue du concept de l'invention aux hommes du métier. Les modes de réalisation qui suivent sont examinés, par souci de simplification, en relation avec la terminologie et la structure d'une machine de rivetage.

Une référence dans toute la spécification à « un mode de réalisation » signifie qu'une fonctionnalité, une structure, ou une caractéristique particulière décrite en relation avec un mode de réalisation est incluse dans au moins un mode de réalisation de la présente invention. Ainsi, l'apparition de l'expression « dans un mode de réalisation » à divers emplacements dans toute la spécification ne fait pas nécessairement référence au même mode de réalisation. En outre, les fonctionnalités, les structures, ou les caractéristiques particulières peuvent être combinées de n'importe quelle manière appropriée dans un ou plusieurs modes de réalisation, sans s'écarter du champ des revendications annexées.

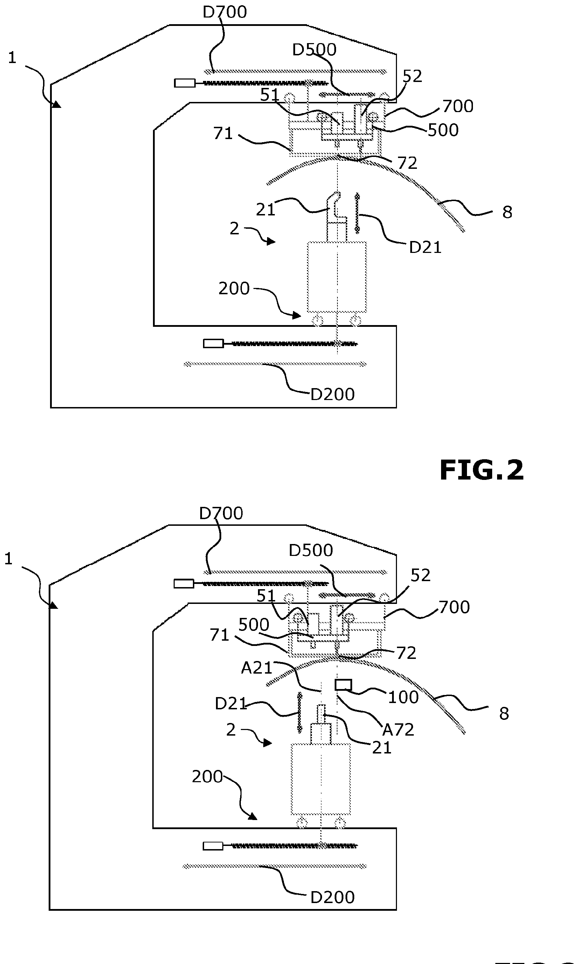

Les figures 2 et 3 illustrent des modes de réalisation d'une machine de rivetage de pièces.

La machine comprend un châssis en forme générale de C qui comprend une partie inférieure, appelée usuellement console inférieure et une partie supérieure, appelée usuellement tête de rivetage, entre lesquelles sont positionnées les pièces à assembler. Dans l'exemple illustré aux figures, le rivet présente un corps muni d'une tête. Les pièces à riveter peuvent être par exemple des tôle 8 pour un fuselage d'avion.

Ladite machine comprend un outil de perçage 52 qui présente un axe de perçage A52. L'outil de perçage 52 est déplaçable selon une direction transversale à l'axe de perçage A52 pour être amené au droit d'une zone des pièces à percer. L'outil de perçage peut comprendre une broche de perçage (foret) et/ou une fraise. On peut en effet prévoir que le perçage soit réalisé à l'aide d'une fraise en déplaçant la fraise selon l'axe de perçage. La fraise peut être déplacée transversalement à l'axe de perçage pour usiner l'orifice de perçage, en particulier pour former le contour de l'orifice. On peut prévoir en particulier que la fraise soit déplacée, par exemple à l'aide d'un chariot, tel que le chariot bouterolle présenté ci-après, selon un axe Y transversal à l'axe de descente de la fraise (par exemple noté Z), tandis que les pièces à riveter sont déplacées ensemble selon un axe X transversal à l'axe Y et à l'axe de descente de la fraise.

La machine comprend aussi un organe d'appui supérieur, appelé serre-tôle supérieur 71, et un organe d'appui inférieur, appelé serre-tôle inférieur 21. Le serre-tôle supérieur 71 comprend une surface d'appui 70 pour, en coopération avec une surface d'appui correspondante du serre-tôle inférieur, serrer l'une contre l'autre les pièces 8 à riveter.

Selon un aspect particulier, la forme du serre-tôle inférieur 21 peut être de type droite comme illustré à la figure 2, ou de type décalée ou offset (par exemple en forme de col de cygne) comme représenté dans la figure 3.

Les serre-tôles 71, 21 sont montés mobiles relativement l'un par rapport à l'autre dans le sens d'un rapprochement desdits serre-tôles 71, 21, pour permettre de serrer les pièces 8 à riveter. Les serre-tôles 71, 21 sont déplaçables en monte et baisse selon une direction A21. La direction A21 est verticale lorsque la surface d'appui au sol de la machine est horizontale.

Il convient de noter qu'un décalage entre l'axe du serre-tôle inférieur et l'axe du serre-tôle supérieur (qui correspond aussi à l'axe de perçage lorsque l'outil de perçage est amené en regard de l'orifice de passage 72 ménagé dans le serre-tôle supérieur) est particulièrement intéressant, lorsque la présence d'un obstacle ne permet pas de percer les pièces dans la zone souhaitée avec le serre-tôle inférieur qui serait en appui de manière coaxiale avec l'axe de perçage.

Il convient de noter que lorsqu'aucun obstacle n'empêche pas de percer dans l'axe du serre-tôle inférieur, le serre-tôle inférieur peut être positionné dans l'axe de perçage, puis les serre-tôles peuvent être positionnés pour écraser un rivet 10 disposé entre les bouterolles supérieure et inférieure et dans un orifice ménagé à travers les pièces à riveter.

La machine comprend aussi un outil de maintien et de mise en place de rivet, appelé bouterolle 51 supérieure.

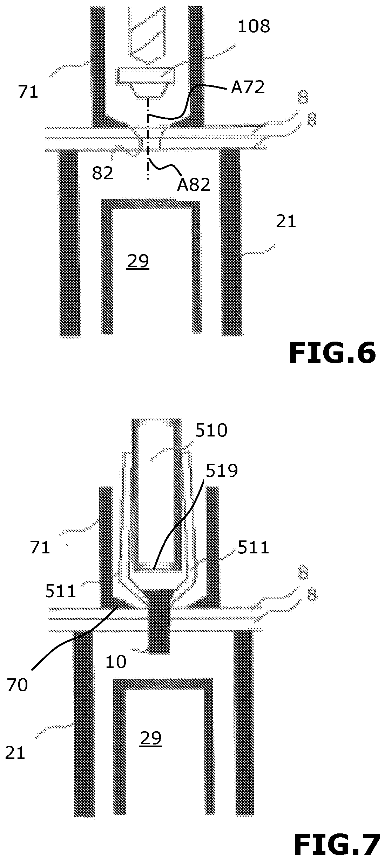

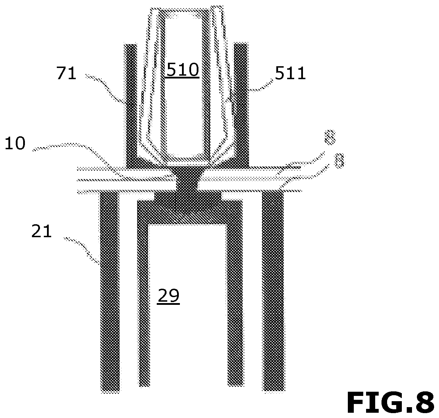

Comme illustré plus particulièrement aux figures 7 et 8, ladite bouterolle supérieure 51 comprend une tige 510 et deux mâchoires 511 situées de part et d'autre de l'axe de la tige. Les mâchoires sont rappelées en position fermée. La bouterolle supérieure permet le maintien et la mise en place du rivet dans un orifice ménagé par perçage à travers les pièces à assembler. Ladite tige présente une extrémité 519 libre apte à venir en appui d'un rivet 10 tenu entre les deux mâchoires 511. Ladite tige 510 est déplaçable à translation selon une direction parallèle à son axe.

Un élément d'appui, appelé bouterolle 29 inférieure, est apte à coopérer avec la bouterolle 51 supérieure pour écraser le rivet 10 (figure 8). La bouterolle 29 inférieure peut être disposée à l'intérieur du serre-tôle inférieur 21.

Le serre-tôle supérieur 71 présente un orifice 72 de passage en regard duquel l'outil de perçage 52 est apte à être positionné. Une broche de perçage 520 de l'outil de perçage 52 peut ainsi être descendue au travers dudit orifice 72 de passage, pour percer une zone desdites pièces 8 serrées entre le serre-tôle supérieur 71 et le serre-tôle inférieur 21. On peut prévoir que l'outil de perçage comprenne deux broches de préférence de types différents, par exemple pour faire de l'arasage avec la deuxième broche après avoir percé avec la première broche. Lesdites broches sont déplaçables en monte et baisse.

Le serre-tôle supérieur 71 et le serre-tôle inférieur 21 sont montés mobiles relativement l'un par rapport à l'autre selon une direction transversale à l'axe de perçage A52.

On peut prévoir que le serre-tôle supérieur 71 et le serre-tôle inférieur 21 soient chacun mobiles par rapport au châssis de la machine, ou que l'un seulement des serre-tôles soit mobile par rapport au châssis de la machine.

Selon un aspect particulier, le serre-tôle inférieur et le serre-tôle supérieur sont chacun déplaçables l'un par rapport à l'autre par rapport au référentiel terrestre. Le serre-tôle inférieur et le serre-tôle supérieur peuvent ainsi être déplacés indépendamment l'un de l'autre, ce qui autorise une grande liberté de positionnement des serre-tôles pour pouvoir procéder aux opérations de perçage et rivetage souhaitées et s'adapter ainsi à la complexité des pièces à riveter et/ou à la présence d'obstacle dans l'environnement des pièces à riveter.

Le serre-tôle inférieur et le serre-tôle supérieur peuvent être déplacés transversalement à l'axe de perçage, de manière non-coaxiale l'un par rapport à l'autre, pour permettre au serre-tôle inférieur d'être écarté de l'axe de perçage lorsqu'un obstacle se situe du côté du serre-tôle inférieur au niveau de cet axe de perçage.

Une telle mobilité transversale permet un décalage latéral de l'axe d'appui A21 du serre-tôle inférieur par rapport à l'axe A72 de l'orifice de passage 72 qui est situé en regard de la zone des pièces à percer. Ainsi, malgré la présence d'un obstacle 100 sous la zone à percer qui empêche d'amener le serre-tôle inférieur en regard directement de la zone à percer, le serre-tôle inférieur 21 peut être décalé pour contourner l'obstacle et former un contre-appui à proximité de la zone à percer pour permettre à l'outil de perçage 52, qui s'étend de l'autre côté des pièces 8, de percer à l'endroit souhaité tout en bénéficiant d'un contre-appui pour une bonne qualité de perçage.

La bouterolle 51 supérieure et l'outil de perçage 52 sont portés par une structure support, appelé chariot bouterolle 500. Le chariot bouterolle 500 est déplaçable selon une direction D500 transversale à l'axe de perçage A52, et donc aussi à l'axe de rivetage A21.

Ainsi, la bouterolle supérieure 51 est déplaçable selon une direction transversale à l'axe de perçage A52, pour pouvoir, une fois le perçage 82 des pièces 8 effectué, mettre en place un rivet 10 dans le perçage 82. Le déplacement du chariot bouterolle 500 est réalisé par exemple à l'aide d'un ou plusieurs moteurs linéaires (synchronisés).

En outre, le serre-tôle supérieur 71 est porté par une structure support 700, appelée chariot tête 700, qui porte également le chariot bouterolle 500. Le chariot bouterolle 500 est monté mobile sur le chariot tête 700 selon ladite direction transversale à l'axe de rivetage A21.

La machine comprend un système de déplacement motorisé du chariot tête 700 selon une direction D700 transversale à l'axe de perçage A52 (et donc aussi à l'axe de rivetage A21).

Le système de déplacement motorisé dudit chariot tête 700 comprend par exemple tout ou partie des éléments suivants : rails, patins, vis à billes, pignon, crémaillère, réducteur.

Selon un aspect particulier, la machine comprend un système de déplacement du serre-tôle 21 inférieur par rapport au châssis de la machine, suivant une direction D21 parallèle à l'axe de perçage A52, entre une position, dite position inactive du serre-tôle 71 supérieur et une position, dite position de serrage, pour exercer un effort d'appui sur les pièces à riveter. Une telle conception de chariot permet de limiter l'encombrement de la machine et de limiter les temps de cycle.

La machine comprend en particulier un chariot inférieur 200 qui porte le serre-tôle inférieur 21 et la bouterolle inférieure 29. Ledit chariot inférieur est mobile selon une direction D200 transversale à l'axe de perçage A52 par l'intermédiaire d'un système de déplacement motorisé.

Le système de déplacement dudit chariot inférieur 200 comprend par exemple tout ou partie des éléments suivants : rails, patins, vis à billes, pignon, crémaillère, réducteur.

La machine comprend aussi un système de déplacement de la tige 510 de la bouterolle 51supérieure configurés pour déplacer ladite extrémité 500 de la tige 20 entre une première position haute, écartée de la surface d'appui du serre-tôle 71 supérieur, dans laquelle ladite tige 510 délimite entre la tige et les mâchoires 511 un logement de maintien de rivet (figure 7), et une deuxième position, dite position basse, plus proche de ladite surface d'appui du serre-tôle 71 supérieur (figure 8).

Le système de déplacement de la tige 510 comprend par exemple un moteur, de préférence électrique, pour une bonne précision et une grande rapidité de déplacement. Le moteur peut être associé à un système de type écrou-vis, par exemple à rouleaux satellites. Selon un aspect particulier, le système de déplacement comprend un mécanisme de transmission de mouvement, tels qu'une courroie, entre le moteur et l'écrou pour permettre, en faisant tourner le moteur dans un sens ou dans l'autre, de déplacer la vis par rapport à l'écrou suivant son axe afin de déplacer la tige entre sa position haute et sa position basse.

La machine peut comprendre en particulier un élément de guidage linéaire permettant de guider le déplacement vertical de la tige de la bouterolle supérieure lors de la descente de la vis.

La machine comprend aussi une unité de pilotage, encore appelée unité de traitement et de calcul, configurée pour piloter les actionneurs de la machine, en particulier les mobilités des serre-tôles et des bouterolles. Ladite unité de pilotage comprend une mémoire dans laquelle peuvent être mémorisées des données, telles que l'écart latéral souhaité entre l'axe de perçage et l'axe du serre-tôle inférieur dans le cas d'un perçage avec appui décalé. Ladite machine peut comprendre en particulier une interface d'entrée de données permettant à un opérateur de définir lesdites données. Ladite unité comprend aussi un processeur (par exemple un microprocesseur ou microcontrôleur) permettant d'exécuter des instructions informatiques d'un programme stocké dans une mémoire de préférence non volatile.

Les fonctions opérées par la machine, notamment le positionnement relatif des serres-tôle inférieur et supérieur, des chariots et l'actionnement des différents organes ou outils de la machine, peuvent ainsi être réalisées par des jeux d'instructions ou modules informatiques implémentés dans un processeur ou contrôleur. On peut aussi prévoir que tout ou partie de ces fonctions soient réalisées par des composants électroniques dédiés ou des composants de type FPGA ou ASIC. Il est aussi possible de combiner des parties informatiques et des parties électroniques.

A titre d'exemple, en l'absence d'obstacle dans l'axe de perçage, l'assemblage de deux tôles 8 ou panneaux peut être réalisé de la manière suivante.

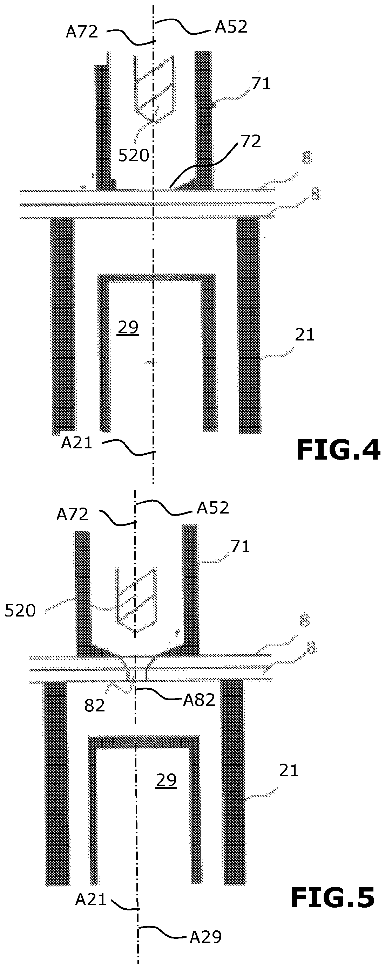

Comme illustré à la figure 4, les tôles 8 sont amenées en position l'une contre l'autre, et sont serrées à l'aide des serre-tôles inférieur et supérieur. Un perçage est réalisé grâce à une ou plusieurs broche(s) 520 portée(s) par le chariot pour ménager un orifice d'insertion d'un rivet 10. Pendant le perçage, le rivet 10 est chargé entre les mâchoires 511 de la bouterolle supérieure, en temps masqué. Un fraisage de l'orifice 82 est réalisé, de préférence en même temps que l'opération de perçage (figure 5). Comme illustré à la figure 6, de l'isolant 108, de préférence de type mastic, est déposé dans l'orifice de perçage à l'aide d'un actionneur.

Le rivet 10 est déposé dans l'orifice 82 de perçage, à travers l'isolant, en abaissant la tige 510 de la bouterolle 51 supérieure (figure 8). Le rivet est ensuite écrasé par déplacement de la bouterolle 29 inférieure en direction de la bouterolle 51 supérieure (figure 8). La tige 510 de la bouterolle 51 supérieure participe à l'écrasement du rivet 10 en formant une butée de contre-appui à la manière d'une enclume lorsque le rivet 10 est écrasé par déplacement de la bouterolle inférieure 29 qui forme un marteau.

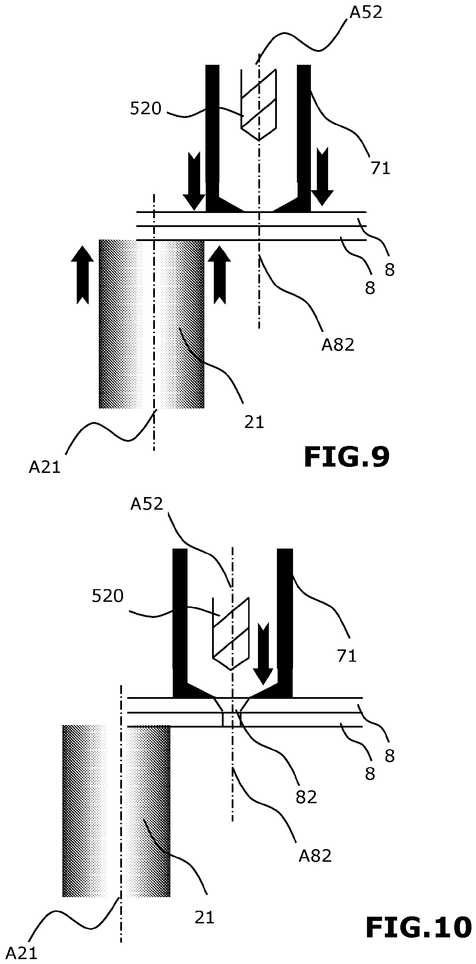

A titre d'exemple, en présence d'un d'obstacle 100 dans l'axe de perçage souhaité, c'est-à-dire dans l'axe de l'orifice 72 ménagé dans le serre-tôle supérieur, l'assemblage de deux tôles 8 ou panneaux peut être réalisé de la manière suivante. Les figures 9 et 10 illustrent des étapes de perçage, comparables aux étapes illustrées aux figures 4 et 5, mais dans le cas où un obstacle 100 se situe dans l'axe de perçage (et donc de rivetage) souhaité.

En particulier, comme illustré à la figure 3, l'obstacle 100 est situé du côté du serre-tôle inférieur 21 dans l'axe d'un orifice de perçage souhaité pour une zone des pièces à riveter.

Les pièces 8 sont serrées entre le serre-tôle supérieur 71 et le serre-tôle inférieur 21. L'orifice de passage 72 du serre-tôle supérieur 71 est situé en regard de la zone à percer des pièces 8.

Le serre-tôle supérieur 71 est en appui contre les pièces 8. Le serre-tôle inférieur 21 est en appui des pièces 8 en une position décalée de l'axe A72 de l'orifice de passage 72 du serre-tôle supérieur 71, c'est-à-dire en décalage de l'axe A82 de l'orifice 82 à percer (figures 9 et 10), pour contourner l'obstacle 100 (figure 3).

Comme illustré à la figure 10, les pièces 8 peuvent alors être percées à l'aide d'une broche 520 de l'outil de perçage 52 positionné dans l'axe de l'orifice de passage 72 du serre-tôle supérieur 71 pour obtenir l'orifice de perçage 82 souhaité dans ladite zone des pièces à riveter.

Un opérateur peut alors, après retrait des serre-tôles inférieur et supérieur par rapport aux pièces 8, procéder à l'introduction, par exemple manuelle, d'un rivet, dans l'orifice 82. Le rivet peut alors être écrasé en utilisant un pistolet à frappe avec un contre effort.

L'invention n'est pas limitée aux modes de réalisation illustrés dans les dessins.

De plus, le terme « comprenant » n'exclut pas d'autres éléments ou étapes. En outre, des caractéristiques ou étapes qui ont été décrites en référence à l'un des modes de réalisation exposés ci-dessus peuvent également être utilisées en combinaison avec d'autres caractéristiques ou étapes d'autres modes de réalisation exposés ci-dessus, sans s'écarter du champ des revendications annexées.

## Revendications

1. Machine de rivetage de pièces (8), de préférence des tôles, par exemple pour un fuselage d'avion, ladite machine comprenant :
- un outil de perçage (52) qui présente un axe de perçage (A52) ;
- un organe d'appui supérieur, appelé serre-tôle supérieur (71), et un organe d'appui inférieur, appelé serre-tôle inférieur (21), montés mobiles relativement l'un par rapport à l'autre dans le sens d'un rapprochement desdits serre-tôles (71, 21), pour permettre de serrer les pièces (8) à riveter ;
- un outil de maintien et de mise en place de rivet, appelé bouterolle (51) supérieure ;
- un élément d'appui, appelé bouterolle (29) inférieure, apte à coopérer avec la bouterolle (51) supérieure pour écraser un rivet (10), lorsque ledit rivet est disposé à l'intérieur d'un orifice (82) percé à travers les pièces (8) à riveter, entre lesdites bouterolles (29, 51) inférieure et supérieure ;
le serre-tôle supérieur (71) présentant un orifice (72) de passage en regard duquel l'outil de perçage (52) est apte à être positionné pour permettre audit outil de perçage (52) de percer une zone desdites pièces (8) serrées entre le serre-tôle supérieur (71) et le serre-tôle inférieur (21),
**caractérisée en ce que** le serre-tôle supérieur (71) et le serre-tôle inférieur (21) sont montés mobiles relativement l'un par rapport à l'autre selon une direction transversale à l'axe de perçage (A52)
la machine comprend aussi une unité de pilotage configurée pour positionner l'orifice de passage (72) du serre-tôle supérieur (71) en regard de la zone à percer des pièces (8), et pour, lorsqu'un obstacle est situé du côté du serre-tôle inférieur dans l'axe d'un orifice de perçage souhaité d'une zone des pièces à riveter, amener le serre-tôle inférieur (21), en appui des pièces (8), dans une position décalée de l'axe (A72) de l'orifice de passage (72) du serre-tôle supérieur (71) afin de contourner l'obstacle.

2. Machine selon la revendication 1, **caractérisée en ce que** la bouterolle supérieure (51) est déplaçable selon une direction transversale à l'axe de perçage (A52), de manière à venir en regard de l'orifice (72) de passage du serre-tôle (71) supérieur, pour pouvoir une fois le perçage (82) des pièces (8) effectué, mettre en place un rivet (10) dans le perçage (82).

3. Machine selon l'une des revendications précédentes, **caractérisée en ce que** la bouterolle (51) supérieure et l'outil de perçage (52) sont portés par une structure support, appelée chariot bouterolle (500), la machine comprenant un système de déplacement motorisé du chariot bouterolle selon une direction (D500) transversale à l'axe de perçage (A52).

4. Machine selon la revendication 3, **caractérisée en ce que** le serre-tôle supérieur (71) est porté par une structure support, appelée chariot tête (700), qui porte également le chariot bouterolle (500),
et **en ce que** la machine comprend un système de déplacement motorisé dudit chariot tête (700) selon une direction (D700) transversale à l'axe de perçage (A52).

5. Machine selon l'une des revendications précédentes, **caractérisée en ce que** la machine comprend une structure support (200), appelée chariot inférieur, du serre-tôle inférieur (21) et de la bouterolle inférieure (29), et la machine comprend un système de déplacement motorisé dudit chariot inférieur selon une direction (D200) transversale à l'axe de perçage (A52).

6. Machine selon l'une des revendications précédentes, **caractérisée en ce que** ladite machine comprend un châssis et un système de déplacement motorisé du serre-tôle (21) inférieur par rapport au châssis, de préférence suivant une direction (D21) parallèle à l'axe de perçage (A52), entre une position, dite position inactive du serre-tôle (71) supérieur et une position, dite position de serrage, pour exercer un effort d'appui sur les pièces à riveter.

7. Machine selon l'une des revendications précédentes, **caractérisée en ce que** l'outil de perçage comprend une broche de perçage et/ou une fraise.

8. Machine selon l'une des revendications précédentes, **caractérisée en ce que** ladite bouterolle supérieure (51) comprend une tige (510) et deux mâchoires (511) situées de part et d'autre de l'axe de la tige,
et **en ce que** la machine comprend un système de déplacement motorisé de la tige (510) de la bouterolle (51) supérieure configurés pour déplacer ladite extrémité (500) de la tige (20) entre une première position, dite position haute, écartée de la surface d'appui du serre-tôle (71) supérieur, dans laquelle ladite tige (510) délimite avec les mâchoires (511) un logement de maintien de rivet, et une deuxième position, dite position basse, plus proche de ladite surface d'appui du serre-tôle (71) supérieur.

9. Procédé de rivetage de deux pièces (8) à l'aide d'une machine de rivetage conforme à l'une des revendications précédentes, lorsqu'un obstacle (100) est situé du côté du serre-tôle inférieur (21) dans l'axe d'un orifice de perçage souhaité (82) d'une zone des pièces à riveter, ledit procédé comprenant les étapes suivantes :
- serrage des pièces (8) entre le serre-tôle supérieur (71) et le serre-tôle inférieur (21), en positionnant l'orifice de passage (72) du serre-tôle supérieur (71) en regard de la zone à percer des pièces (8), et en amenant le serre-tôle inférieur (21) en appui des pièces (8) en une position décalée de l'axe (A72) de l'orifice de passage (72) du serre-tôle supérieur (71) afin de contourner l'obstacle;
- perçage des pièces (8) à l'aide de l'outil de perçage (52) positionné dans l'axe de l'orifice de passage (72) du serre-tôle supérieur (71) pour obtenir l'orifice de perçage (82) souhaité dans ladite zone des pièces à riveter.

10. Procédé selon la revendication 9, **caractérisé en ce que** qu'il comprend les étapes suivantes :
- introduction d'un rivet dans ledit perçage réalisé ;
- écrasement du rivet à l'aide d'un outil, tel qu'un pistolet à frappe.

## Patentansprüche

1. Nietmaschine von Werkstücken (8), vorzugsweise Blechen, z. B. für einen Flugzeugrumpf, wobei die Maschine Folgendes umfasst:
- ein Bohrwerkzeug (52), das eine Bohrachse (A52) aufweist;
- ein oberes Stützorgan, bezeichnet als oberer Blechhalter (71), und ein unteres Stützorgan, bezeichnet als unterer Blechhalter (21), die beweglich mit Bezug aufeinander in Richtung einer Annäherung der Blechhalter (71, 21) montiert sind, um zu ermöglichen, die zu nietenden Werkstücke (8) zu halten;
- Werkzeug zum Festhalten und Anordnen des Niets, bezeichnet als oberer Nietstempel (51);
- ein Stützelement, bezeichnet als unterer Nietstempel (29), der ausgelegt ist, um mit dem oberen Nietstempel (51) zusammenzuarbeiten, um einen Niet (10) zu zerdrücken, wenn der Niet im Inneren einer Öffnung (82) angeordnet ist, die durch die zu nietenden Werkstücke (8) zwischen dem unteren und oberen Nietstempel (29, 51) gebohrt ist;
wobei der obere Blechhalter (71) eine Durchgangsöffnung (72) aufweist, gegenüber der das Bohrwerkzeug (52) ausgelegt ist, positioniert zu sein, um dem Bohrwerkzeug (52) zu ermöglichen, einen Bereich der Werkstücke (8) zu bohren, der zwischen dem oberen Blechhalter (71) und dem unteren Blechhalter (21) gehalten wird,
**dadurch gekennzeichnet, dass** der obere Blechhalter (71) und der untere Blechhalter (21) relativ mit Bezug aufeinander gemäß einer Querrichtung zur Bohrachse (A52) montiert sind, die Maschine auch eine Steuereinheit umfasst, die konfiguriert ist, um die Durchgangsöffnung (72) des oberen Blechhalters (71) gegenüber dem Bereich zum Bohren der Werkstücke (8) zu positionieren, und um, wenn sich ein Hindernis auf der Seite des unteren Blechhalters in der Achse einer gewünschten Bohröffnung eines Bereichs der zu nietenden Werkstücke befindet, den unteren Blechhalter (21) in Auflage der Werkstücke (8) in eine versetzte Position der Achse (A72) der Durchgangsöffnung (72) des oberen Blechhalters (71) zu bringen, um das Hindernis zu umgehen.

2. Maschine nach Anspruch 1, **dadurch gekennzeichnet, dass** der obere Nietstempel (51) gemäß einer Querrichtung zur Bohrachse (A52) verschoben werden kann, um gegenüber der Durchgangsöffnung (72) des oberen Blechhalters (71) angeordnet zu werden, um, nachdem die Bohrung (82) der Werkstücke (8) durchgeführt ist, einen Niet (10) in der Bohrung (82) anzuordnen.

3. Maschine nach einem der vorhergehenden Ansprüche, **dadurch gekennzeichnet, dass** der obere Nietstempel (51) und das Bohrwerkzeug (52) von einer Stützstruktur getragen werden, bezeichnet als Nietstempelwagen (500), wobei die Maschine ein motorisiertes System zur Verschiebung des Nietstempelwagens gemäß einer Querrichtung (D500) zur Bohrachse (A52) umfasst.

4. Maschine nach Anspruch 3, **dadurch gekennzeichnet, dass** der obere Blechhalter (71) von einer Stützstruktur, bezeichnet als vorderer Wagen (700), getragen wird, der auch den Nietstempelwagen (500) trägt,
und dadurch, dass die Maschine ein motorisiertes System zur Verschiebung des vorderen Wagens (700) gemäß einer Querrichtung (D700) zur Bohrachse (A52) umfasst.

5. Maschine nach einem der vorhergehenden Ansprüche, **dadurch gekennzeichnet, dass** die Maschine eine Stützstruktur (200), bezeichnet als unterer Wagen, des unteren Blechhalters (21) und des unteren Nietstempels (29) umfasst, und die Maschine ein motorisiertes System zur Verschiebung des unteren Wagens gemäß einer Querrichtung (D200) zur Bohrachse (A52) umfasst.

6. Maschine nach einem der vorhergehenden Ansprüche, **dadurch gekennzeichnet, dass** die Maschine einen Rahmen und ein motorisiertes System zum Verschieben des unteren Blechhalters (21) mit Bezug auf den Rahmen, vorzugsweise gemäß einer Richtung (D21) parallel zur Bohrachse (A52), zwischen einer Position, bezeichnet als inaktive Position des oberen Blechhalters (71) und einer Position, bezeichnet als Halteposition, umfasst, um eine Auflagekraft auf die zu nietenden Werkstücke auszuüben.

7. Maschine nach einem der vorhergehenden Ansprüche, **dadurch gekennzeichnet, dass** das Bohrwerkzeug eine Bohrspindel und/oder eine Fräse umfasst.

8. Maschine nach einem der vorhergehenden Ansprüche, **dadurch gekennzeichnet, dass** der obere Nietstempel (51) einen Stift (510) und zwei Backen (511) umfasst, die sich auf beiden Seiten der Achse des Stifts befinden, und dadurch, dass die Maschine ein motorisiertes System zur Verschiebung des Stifts (510) des oberen Nietstempels (51) umfasst, konfiguriert, um das Ende (500) des Stifts (20) zwischen einer ersten Position, bezeichnet als oberer Position, entfernt von der Auflagefläche des oberen Blechhalters (71), in der der Stift (510) mit den Backen (511) eine Halteaufnahme des Niets begrenzt, und einer zweiten Position, bezeichnet als untere Position, näher an der Auflagefläche des oberen Blechhalters (71), zu verschieben.

9. Verfahren zum Nieten von zwei Werkstücken (8) mit Hilfe einer Nietmaschine nach einem der vorhergehenden Ansprüche, wenn sich ein Hindernis (100) an der Seite des unteren Blechhalters (21) in der Achse einer gewünschten Bohrungsöffnung (82) eines Bereichs der zu nietenden Werkstücke befindet, wobei das Verfahren die folgenden Schritte umfasst:
- Halten der Werkstücke (8) zwischen dem oberen Blechhalter (71) und dem unteren Blechhalter (21) durch Positionieren der Durchgangsöffnung (72) des oberen Blechhalters (71) gegenüber dem Bereich zum Bohren der Werkstücke (8) und durch Bringen des unteren Blechhalters (21) in Auflage der Werkstücke (8) in eine versetzte Position der Achse (A72) der Durchgangsöffnung (72) des oberen Blechhalters (71), um das Hindernis zu umgehen;
- Bohren der Werkstücke (8) mit Hilfe des Bohrwerkzeugs (52), das in der Achse der Durchgangsöffnung (72) des oberen Blechhalters (71) positioniert ist, um die gewünschte Bohröffnung (82) im Bereich der zu nietenden Werkstücke zu erhalten.

10. Verfahren nach Anspruch 9, **dadurch gekennzeichnet, dass** es die folgenden Schritte umfasst:
- Einführen eines Niets in die durchgeführte Bohrung;
- Zerdrücken des Niets mit Hilfe eines Werkzeugs wie z. B. einer Schlagpistole.

## Claims

1. A machine for riveting parts (8), preferably metal sheets, for example for an airplane fuselage, said machine comprising:
- a drilling tool (52) which has a drilling axis (A52);
- an upper support member, called upper sheet clamp (71), and a lower support member, called lower sheet clamp (21), which are mounted to be movable relative to one another in a direction bringing said sheet clamps (71, 21) closer to each other, to enable clamping of the parts to be riveted;
- a rivet holding and setting tool, called upper rivet set (51);
- a support element, called lower rivet set (29), adapted to cooperate with the upper rivet set (51) to flare a rivet (10), when said rivet is disposed inside an orifice (82) pierced through the parts (8) to be riveted, between the lower and upper rivet sets (29, 51);
the upper sheet clamp (71) having a passage orifice (72) facing which the drilling tool (52) is adapted to be positioned to enable said drilling tool to drill an area of said parts (8) clamped between the upper sheet clamp (71) and the lower sheet clamp (21),
**characterized in that** the upper sheet clamp (71) and the lower sheet clamp (21) are mounted to be movable relative to one another along a direction transverse to the drilling axis (A52) the machine also comprises a control unit configured to position the passage orifice (72) of the upper sheet clamp (71) facing the area to be drilled of the parts (8), and, when an obstacle is located on the side of the lower sheet clamp in the axis of a desired drilling orifice of an area of the parts to be riveted, to bring the lower sheet clamp (21), supporting the parts (8), into a position offset from the axis (A72) of the passage orifice (72) of the upper sheet clamp (71) in order to bypass the obstacle.

2. The machine according to claim 1, **characterized in that** the upper rivet set (51) is movable along a direction transverse to the drilling axis (A52), so as to come to face the passage orifice (72) of the upper sheet clamp (71), to be able, once the drilling orifice (82) of the parts (8) has been made, to place a rivet (10) in the drilling orifice (82).

3. The machine according to one of the preceding claims, **characterized in that** the upper rivet set (51) and the drilling tool (52) are carried by a support structure, called rivet set carriage (500), the machine comprising a motorized displacement system of the rivet set carriage along a direction (D500) transverse to the drilling axis (A52).

4. The machine according to claim 3, **characterized in that** the upper sheet clamp (71) is carried by a support structure, called head carriage (700), which also carries the rivet set carriage (500), and **in that** the machine comprises a motorized displacement system of said head carriage (700) along a direction (D700) transverse to the drilling axis (A52).

5. The machine according to one of the preceding claims, **characterized in that** the machine comprises a support structure (200), called lower carriage, of the lower sheet clamp (21) and of the lower rivet set (29), and a motorized displacement system of said lower carriage along a direction (D200) transverse to the drilling axis (A52).

6. The machine according to one of the preceding claims, **characterized in that** said machine comprises a chassis and a motorized movement system of the lower sheet clamp (21) relative to the chassis, preferably along a direction (D21) parallel to the drilling axis (A52), between a position, called inactive position of the upper clamp (71), and a position, called clamping position, for exerting a bearing force on the parts to be riveted.

7. The machine according to one of the preceding claims, **characterized in that** the drilling tool comprises a drill spindle and/or a milling cutter.

8. The machine according to one of the preceding claims, wherein said upper rivet set (51) comprises a rod (510) and two jaws (511) located on either side of an axis of the rod,
and in that the machine comprises a motorized displacement system of the rod (510) of the upper rivet set (51) configured to move said end (500) of the rod (20) between a first position, called high position, spaced apart from the support surface of the upper sheet clamp (71), in which said rod (510) delimits, with the jaws (511), a housing for holding a rivet, and a second position, called low position, closer to the support surface of the upper sheet clamp (71).

9. A method of riveting two parts (8) using a riveting machine according to one of the preceding claims, when an obstacle (100) is located on the side of the lower sheet clamp (21) in the axis of a desired drilling orifice (82) of an area of the parts to be riveted, said method comprising the following steps:
- clamping the parts (8) between the upper sheet clamp (71) and the lower sheet clamp (21), by positioning the passage orifice (72) of the upper sheet clamp (71) facing the area to be drilled of the parts (8), and by bringing the lower sheet clamp (21) in support of the parts (8) in a position offset from the axis (A72) of the passage orifice (72) of the upper sheet clamp (71) so as to bypass the obstacle;
- drilling the parts (8) using the drilling tool (52) positioned in the axis of the passage orifice (72) of the upper sheet clamp (71) to obtain the desired drilling orifice (82) in the area of the parts to be riveted.

10. The method according to claim 9, **characterized in that** it comprises the following steps:
- introducing a rivet into said produced drilling orifice;
- flaring the rivet using a tool, such as an impact pistol.
